# EUROPEAN PATENT APPLICATION

(11) **EP 3 971 103 A1**
(43) Date of publication of application: **23.03.2022**
(21) Application number: 20930336.1
(22) Date of filing: 09.04.2020
(51) Int. Cl.: B65D 43/02, B65D 43/08, B65D 43/10, B65D 47/08, A47G 19/22

(54) **LID FOR A DISPOSABLE CUP**

(30) Priority: 07.04.2020 RU 2020113034
(71) Applicant: Forpet S.A.R.L., 1511 Luxembourg (LU)
(72) Inventor: RASTORGUEV, Dmitrii Sergeevich, Moscow, 123154 (RU); NIKITENKO, Sergei Sergeevich, oblast, 141406 (RU); TSIRKULEV, Mikhail Valerevich, Moscow, 109544 (RU)
(74) Representative: Spengler, Robert
(86) International application number: PCT/RU2020/000172
(87) International publication number: WO 2021/206579

(57) **Abstract**

The utility model relates to means for closing drinking vessels, and more particularly to lids for disposable cups for hot and cold beverages. The technical result consists in devising a lid for a disposable cup that is simple to produce and can be used for the closure of hot and cold beverages, based on virgin and/or recycled (obtained from polyethylene terephthalate waste) polyethylene terephthalate foam. The essence of the utility model is that the lid for a disposable cup consists of a body with a rim for fastening to the lip of the cup, and an opening for the liquid supply, said lid being made of polyethylene terephthalate foam with a density from 100 kg/m3 to 900 kg/m3 and an inherent viscosity from 0.5 dL/g to 1.0 dL/g.

## Description

### FIELD OF TECHNOLOGY

The utility model relates to means for closing drinking vessels, more specifically to lids for disposable cups for hot and cold drinks.

### BACKGROUND

Similar solutions are disclosed in patents No. US 2003657 from 04.06.1935, No. US 3938695 from 17.02.1976, No. US 4202459 from 13.05.1980, No. US 4428498 from 31.01.1984. The main technical approach for the lids is to obtain products with a rim. An annular groove is made between the flange of the lid and the lip of the cup, which ensures that the lid engages with the edge of the cup body and prevents the leakage and / or spillage of liquid, and a hole or a notch for the hole is made in the lid.

The disadvantages of these types of lids for disposable cups are the following: limited reuse of lids made from the currently used polymer materials due to a significant deterioration in the properties of polymers (polystyrene and / or polypropylene) during recycling; emission of harmful substances when using polystyrene lids in contact with hot liquids; deterioration of the physical and mechanical properties of polypropylene lids in contact with hot liquids due to softening of polypropylene and a high shrinkage factor; high heat transfer factor of the currently used polymers can lead to a damage or burns of the human lip tissue when used with hot liquids; difficult recycling of cardboard-based lids due to the polyethylene layers that they contain, usually it is incineration; a long period of natural decomposition of the utilized lids for closing disposable cups due to the polymers used in them (polystyrene and / or polypropylene) or due to the difficultly recyclable layers of polyethylene or polyethylene copolymers contained in them; the use of cardboard for lids leads to the destruction of the world's forest resources .

### SUMMARY

The purpose of the current invention is to create new lids for disposable cups that eliminate the disadvantages of the known analogs. The technical result consists in creating a lid for a disposable cup, easy to manufacture and suitable for use in sealing hot and cold drinks, based on foamed primary and / or secondary (obtained from polyethylene terephthalate waste) polyethylene terephthalate. This technical result is achieved due to the entire set of essential features.

The essence of the utility model lies in the fact that the lid for the disposable cup includes a body with a rim for fastening to the lip of the cup and an opening for a fluid supply, and the lid is made of foamed polyethylene terephthalate with a density of 100 kg / m³ to 900 kg / m³, whereas the neat polyethylene terephthalate has with an intrinsic viscosity of 0.5 dl / g to 1.0 dl / g. At the same time, the opening for the liquid supply is made in the form of a notch. And the thickness of the foamed polyethylene terephthalate is in the range from 100 microns to 1000 microns. In addition, foamed recycled polyethylene terephthalate is used as foamed polyethylene terephthalate for the production.

### BRIEF DESCRIPTION OF DRAWINGS

The utility model is illustrated graphically, where:

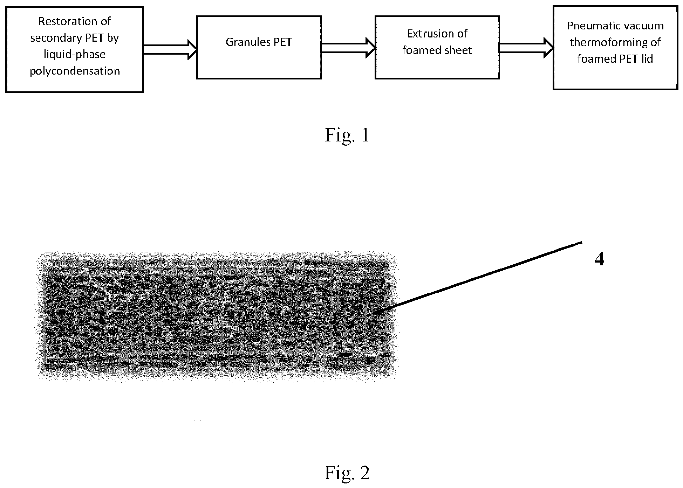

Fig. 1 schematically depicts a process for manufacturing a lid for a disposable cup based on foamed polyethylene terephthalate;
Fig. 2 shows the structure of foamed polyethylene terephthalate;

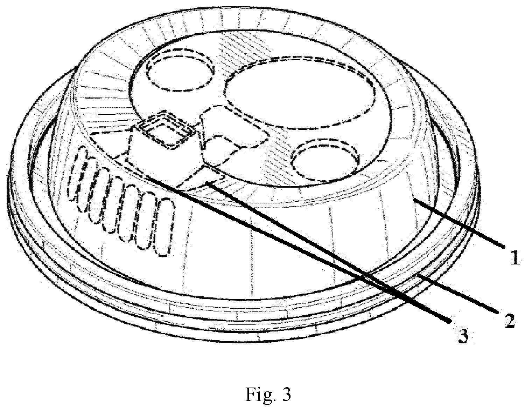

Fig. 3 shows one of the options for a lid for a disposable cup.

### DETAILED DESCRIPTION OF THE PREDERRED EMBODIMENT

The lid for a disposable cup consists of a body 1, a rim 2 for fastening the lid to the lip of the cup, and an opening 3 for fluid supply. The opening 3 is cut through. Moreover, the lid for the disposable cup is made of foamed polyethylene terephthalate 4, which retains sufficient strength to withstand the load and ensure the necessary tightness on the lip of the cup. The lid for the disposable cup is made of foamed polyethylene terephthalate 4 with a density ranging from 100 kg / m³ to 900 kg / m³, with an intrinsic viscosity (IV) of a layer of foamed polyethylene terephthalate 4 ranging from 0.5 dl / g (deciliters / grams) to 1.0 dl / g. The thickness of the foamed polyethylene terephthalate 4 is chosen in the range from 100 µm to 1000 µm. As foamed polyethylene terephthalate 4, a foamed recycled polyethylene terephthalate can be used. Foamed recycled polyethylene terephthalate is obtained from PET waste after several stages of processing: washing, cleaning of PET waste; crushing, separation by types of polymers and colors; extrusion of polyethylene terephthalate melt; polycondensation of polyethylene terephthalate in the liquid phase. The polycondensation of polyethylene terephthalate in the liquid phase is based on the inherent ability of PET to condense in the molten phase under vacuum conditions. This condensation leads to an increase in the intrinsic viscosity. The high-efficiency vacuum environment effectively removes harmful chemical contaminants from the material, making it possible to use recycled material for 100% safe contact with food. As the molten PET flows into the vertical portion of the P: REACT (LSP reactor), strands are formed to form a corresponding surface in volume. The material is then collected in a horizontal drum and slowly moved forward. The condensation process begins immediately after the formation of the strands and continues until the PET leaves the LSP reactor. The increase in the intrinsic viscosity is controlled by the residence time of the molten PET in the LSP reactor and the degree of vacuum, and therefore can be set to a desired level. Parameter settings allow the control unit to maintain a predetermined IV level within a narrow tolerance range. The process of removing impurities is very efficient as it is carried out in the liquid phase of PET. Not only does the material purity exceeds the limits being set by food industry standards, it also effectively removes lubricants from the strands during the cleaning process. The increase in intrinsic viscosity is measured at about 0.01 dl / g per minute. The continuous operation of the LSP reactor provides a narrow IV range of the granulate which is suitable for high-end applications such as fiber spinning or extrusion sheet. Fluctuations in intrinsic viscosity during mass production are simply ruled out. The separation of contaminants such as lubricants or substances not intended for contact with food is carried out under the action of a highly effective vacuum conditions. The high removal rate of impurities allows the LSP reactor to operate in a variety of applications, providing high operational flexibility. The favorable conditions created in the machine, which is an LSP reactor (including temperature / surface-to-volume ratio / high-efficiency vacuum), allows the PET condensation process to initiate freely. This results in an increase in intrinsic viscosity of about 0.01 dl / g per minute. Faster response times translate into faster results and higher profitability.

The method for producing a lid for a disposable cup is as follows. From the pellets of polyethylene terephthalate during extrusion by the method of physical foaming with nitrogen and / or carbon dioxide gases or their mixture, rolls of foamed polyethylene terephthalate films are obtained. Next, rolls of foamed polyethylene terephthalate 4 are installed on the unwinding unit of the thermoforming machine. At the next stage, in a thermoforming machine, the material is heated to the softening temperature, and then the lids are molded preferably by the method of pneumatic vacuum thermoforming, at the next stage, a notch or a punching of the opening 3 is made, then the lids themselves are cut out of foamed polyethylene terephthalate 4 and stacked for subsequent stacking in boxes. The claimed utility model is used as follows. The lid is put on the disposable cup with a hot or cold drink in any way (automatic, manual, combined).

### INDUSTRIAL APPLICABILITY

The claimed utility model allows the production of a lid for a disposable cup, including the main carrier layer of foamed polyethylene terephthalate and 100% recycling of the used packaging based on the material with the main carrier layer of foamed polyethylene terephthalate, by crushing, followed by polycondensation of polyethylene terephthalate in the liquid phase, restoring the properties of polyethylene terephthalate to primary raw materials. The claimed utility model allows for an unlimited number of recycling of the lids for the disposable cups with the main carrier layer of foamed polyethylene terephthalate. The claimed utility model allows to create lids for disposable cups made of foamed polyethylene terephthalate with physical and mechanical characteristics better than similar lids for disposable cups based on polystyrene and / or polypropylene, cardboard and / or paper. The claimed utility model does not emit harmful substances in contact with hot liquids in comparison with polystyrene, does not change its physical and mechanical properties when exposed to hot liquids in comparison with polypropylene, and it is cheaper in cost, depending on the required foaming coefficient and depending on the intrinsic viscosity of polyethylene terephthalate. Thus, the claimed utility model improves the performance characteristics of the product.

## Claims

1. A lid for a disposable cup, comprising of a body with a rim for fastening to a lip of the cup and an opening for a liquid supply, **characterized in that** the lid is made of a foamed polyethylene terephthalate with a density from 100 kg / m³ to 900 kg / m³, with an intrinsic viscosity of 0.5 dl / g to 1.0 dl / g of the neat polyethylene terephthalate.

2. The lid according to claim 1, **characterized in that** the opening for the fluid supply is made in a form of a notch.

3. The lid according to claim 1, **characterized in that** a thickness of the foamed polyethylene terephthalate is in a range from 100 µm to 1000 µm.

4. The lid according to claim 1, **characterized in that** a foamed-recycled polyethylene terephthalate coming for waste stream is used as the basic material for the foamed polyethylene terephthalate.
